# EUROPEAN PATENT APPLICATION

(11) **EP 1 738 967 A1**
(43) Date of publication of application: **03.01.2007**
(21) Application number: 06076197.0
(22) Date of filing: 09.06.2006
(51) Int. Cl.: B60R 21/013

(54) **Dual sensor satellite module for a vehicle supplemental restraint system**

(30) Priority: 30.06.2005 US 174163
(71) Applicant: Delphi Technologies, Inc., Troy, Michigan 48007 (US)
(72) Inventor: Hawes, Kevin J., Greentown, IN 46936 (US); Pagington, Scott A., Greentown, IN 46936 (US); Shen, Junqiang, Kokomo, IN 46902 (US)
(74) Representative: Denton, Michael John

(57) **Abstract**

A satellite module (12, 14, 16) mounted near the periphery of a vehicle (10) inboard of a body panel such as a bumper (18) or side door panel (20a, 22a) includes both primary and secondary (sating) sensors (36, 37). Response time is enhanced by co-locating the sensors (36, 37) in a satellite module (12, 14, 16), and reliability is enhanced by utilizing different sensing technologies for the co-located sensors (36, 37). In a preferred embodiment, either the primary or secondary sensor (36, 37) is responsive to airflow inboard of the body panel (18, 20a, 22a) due to a crash event.

## Description

### TECHNICAL FIELD

The present invention relates to supplemental restraint systems in motor vehicles, and more particularly to crash sensing apparatus disposed in a satellite module near the periphery of a vehicle.

### BACKGROUND OF THE INVENTION

It has been customary in the deployment of vehicular supplemental restraints such as air bags to require both a primary crash sensor for determining whether and when the restraints should be deployed for a detected crash event and a secondary (safing) crash sensor for independently confirming the existence of the crash event. In most system configurations, the primary crash sensor is mounted in a satellite module disposed near the periphery of the vehicle (such as behind the front bumper or in the side door or pillar), while the secondary crash sensor is mounted along with the signal processor in a central module disposed near the center of the vehicle. This configuration is intended to enhance fault tolerance, but can also result in unacceptable deployment delay, particularly in applications such as side impacts and certain frontal impacts where the required deploy time occurs very soon after the onset of the crash. In other words, a primary satellite-mounted sensor may provide timely impact detection, but structural dynamics of the vehicle result in a delayed reaction at the centrally located secondary sensor. Accordingly, what is needed is a fault tolerant crash impact sensing apparatus that detects impacts both quickly and reliably.

### SUMMARY OF THE INVENTION

The present invention is directed to an improved and fault tolerant vehicle crash sensing apparatus for a supplemental restraint system in which primary and secondary (safing) sensors are co-located in a satellite module mounted near the periphery of the vehicle inboard of a body panel such as a bumper or side door panel. Fault tolerance is enhanced by utilizing different sensing technologies for the co-located sensors, and in a preferred embodiment, either the primary or secondary sensor is responsive to airflow inboard of a body panel due to impacts with the body panel.

### BRIEF DESCRIPTION OF THE DRAWINGS

FIG. 1 is a diagram of a vehicle equipped with a supplemental restraint system including multiple satellite crash sensing modules according to this invention;
FIG. 2A is a block diagram of the side-impact satellite module of FIG. 1;
FIG. 2B is a block diagram detailing a portion of the block diagram of FIG. 2A pertaining to supplemental restraint deployment logic;
FIG. 3A is a diagram of a heated element airflow sensor for the satellite modules of FIG. 1;
FIG. 3B is a diagram of a venturi airflow sensor for the satellite modules of FIG. 1; and
FIG. 3C is a diagram of a Pitot tube airflow sensor for the satellite modules of FIG. 1.

### DESCRIPTION OF THE PREFERRED EMBODIMENT

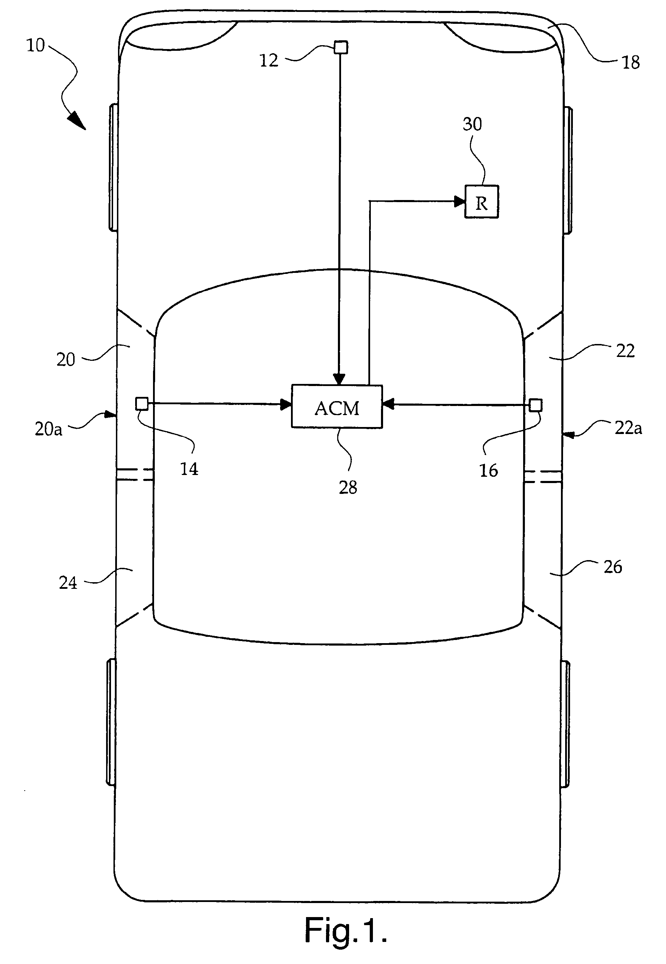

Referring to FIG. 1, the reference numeral 10 generally designates a vehicle equipped with a supplemental restraint system including satellite crash sensing modules 12, 14, 16 for detecting frontal and side impacts. The frontal impact satellite module 12 is located inboard of the front bumper 18, while the side impact satellite modules 14, 16 are located in the front side doors 20, 22 inboard of the exterior door panels 20a, 22a. Of course, satellite modules may additionally be placed in the rear side doors 24, 26 or in other portions of the vehicle 10 if desired. The satellite modules 12, 14, 16 include primary and secondary (safing) crash sensors as explained below, and each satellite module 12, 14, 16 is capable of issuing a deployment command for one or more supplemental restraint devices, designated in FIG. 1 by the single block (R) 30. The deployment commands produced by satellite modules 12, 14, 16 are supplied to a microprocessor-based airbag control module (ACM) 28, which diagnoses proper operation of the satellite modules 12, 14, 16 and deploys restraints 30 corresponding to the received deployment commands if the respective satellite module(s) is deemed to be in proper working condition. For example, the ACM 28 may include one or more internal crash sensors such as accelerometers for diagnosing proper operation of the satellite modules 12, 14, 16. Alternatively, the crash signals developed by the satellite sensors could be processed by ACM 28; in this case, the satellite modules 12, 14, 16 would supply ACM 28 crash signals instead of deployment commands, and crash signal developed by sensors internal to ACM 28 could be used as additional safing signals.

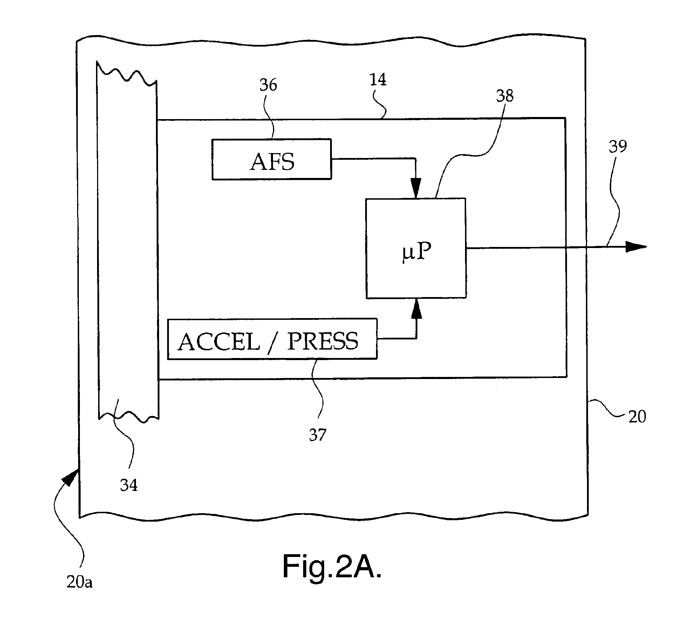

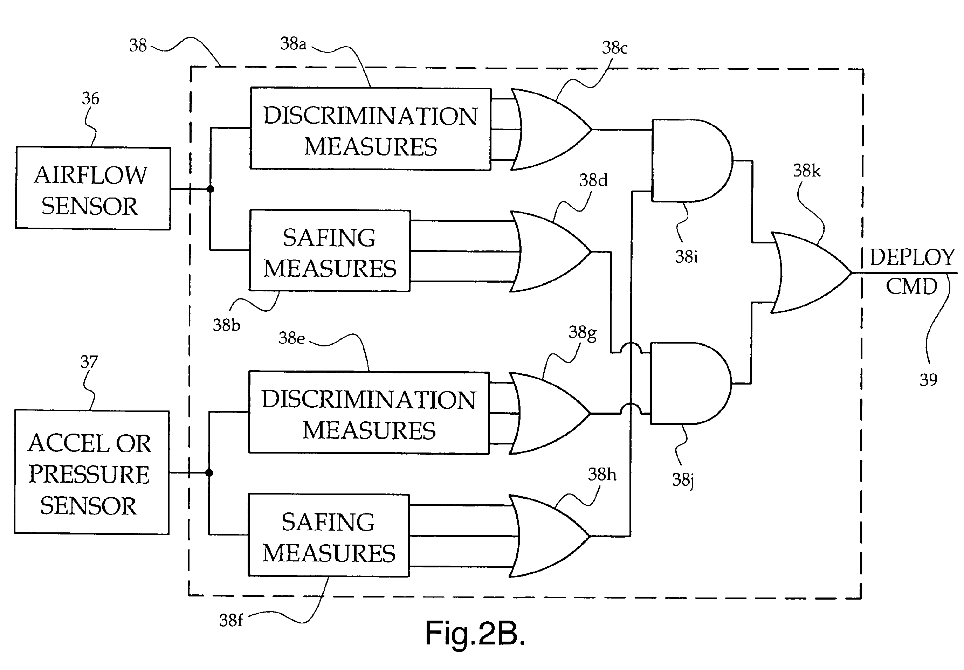

FIG. 2A illustrates a mechanization of the side impact satellite module 14. In the illustration, the satellite module 14 is mounted on a structural beam 34 in the vehicle side door 20, inboard of the exterior door panel 20a. Alternately, the module 14 could be mounted on an inner door panel. The satellite module 14 includes both primary and secondary crash sensors 36, 37 and a microprocessor (µP) 38 that receives and processes the crash signals produced by sensors 36 and 37 to detect a crash event and to determine if and when one more of the restraints 30 should be deployed for passenger protection. As explained below in reference to FIG. 2B, the microprocessor 38 issues a deployment command on line 39 for a side-impact crash event if the primary crash sensor 36 indicates that the crash is sufficiently severe, and the secondary crash sensor 37 confirms the existence of a severe crash. According to this invention, fault tolerance is enhanced because the sensors 36 and 37 utilize different sensing technologies and reliability is enhanced because both sensors produce crash signals that reliably discriminate between crash events and non-crash events. To this end, one of the primary and secondary crash sensors 36, 37 is responsive to impact-related airflow inboard of the door panel 20a, and the other crash sensor 37, 36 is responsive to a different impact-related parameter such as lateral acceleration or air pressure in door 20. In the illustrated embodiment, the primary crash sensor 36 is an airflow sensor (AFS) and the secondary crash sensor 37 is an acceleration sensor or pressure sensor (ACCEL/PR).

The block diagram of FIG. 2B represents deployment logic carried out by the microprocessor 38 of satellite module 14. In applications where the satellite module 14 does not have signal processing capability, the deployment logic of FIG 2B can be carried out by the ACM 28. Blocks 38a and 38b respectively represent various crash discrimination and safing measures or determinations based on the airflow signal produced by sensor 36. Similarly, blocks 38e and 38f respectively represent various crash discrimination and safing measures or determinations based on the acceleration or pressure signal produced by sensor 37. In general, the crash discrimination measures of blocks 38a and 38e can be sophisticated algorithms designed to discriminate between deployment events and non-deployment events; each block may comprise several different algorithms, as indicated by the multiple outputs. The safing measures of blocks 38b and 38f, on the other hand, are typically less sophisticated than the crash discrimination measures, and are designed primarily to confirm the existence of a crash event. The logic gates 38c, 38h, 38i and 38k produce a deployment command on line 39 when at least one of the discrimination measures of block 38a indicates the occurrence of a deployment event and at least one of the safing measures of block 38f confirms the existence of the crash event. Similarly, the logic gates 38d, 38g, 38j and 38k produce a deployment command on line 39 when at least one of the discrimination measures of block 38e indicates the occurrence of a deployment event and at least one of the safing measures of block 38b confirms the existence of the crash event.

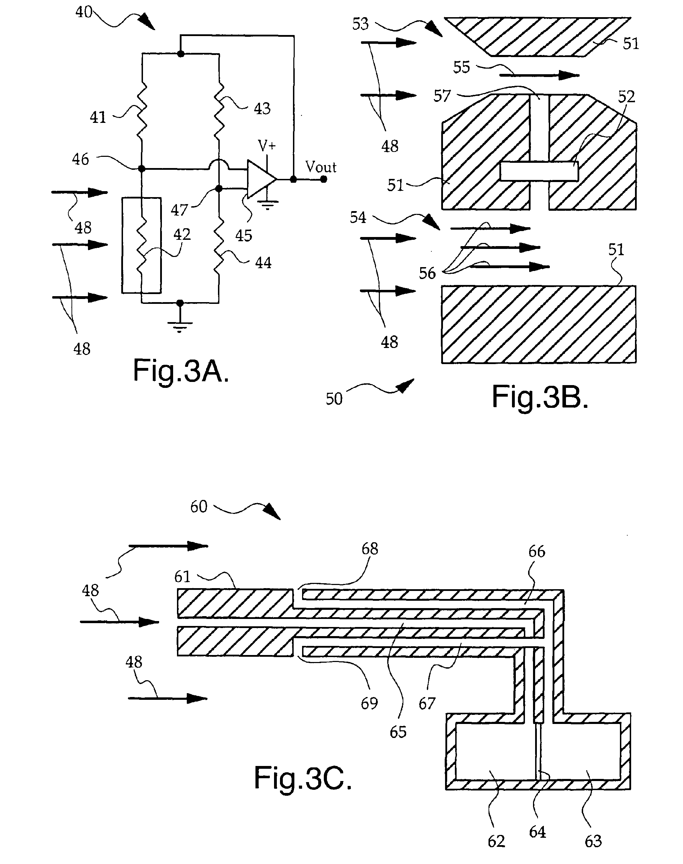

FIGS. 3A-3C depict three examples of suitable airflow sensors. When an exterior vehicle body panel such as the bumper 18 or the door panels 20a, 22a of side doors 20, 22 is struck by an object, the body panel deflects inward. The inward deflection produces compression and inward displacement of air inboard of the body panel, and the airflow sensors within the respective satellite modules 12, 14, 16 produce signals responsive to the airflow. FIG. 3A depicts a heated element sensor 40; FIG. 3B depicts a venturi sensor 50; and FIG. 3C depicts a Pitot tube sensor 60.

Referring to FIG. 3A, the heated element sensor 40 comprises four resistors 41, 42, 43, 44 configured in a conventional Wheatstone bridge arrangement and a differential amplifier 45 responsive to the potential difference between the bridge nodes 46 and 47. The amplifier 45 adjusts the bridge voltage (Vout) as required to balance the bridge. The resistors 41-44 are selected so that when the bridge is balanced, the resistor 42 (which may be a wire, for example) is maintained at an elevated temperature such as 250°C. The resistor 42 is positioned adjacent to a body panel such as bumper 18 or door panels 20a, 22a so that transient airflow (as represented by the arrows 48) due to deflection of the body panel in a crash event displaces the heated air surrounding the resistor 42 with air at essentially ambient temperature. This cools the resistor 42 and the amplifier 45 responds by increasing the bridge voltage. In this way, the amplifier output voltage Vout provides a measure of the magnitude of the airflow across resistor 42.

Referring to FIG. 3B, the venturi sensor 50 has a sensor body 51 and a differential pressure sensor 52, such as a silicon diaphragm sensor. The sensor body 51 is located adjacent a body panel (such as bumper 18 or door panels 20a, 22a) and is configured to define restricted and unrestricted airflow ports 53, 54 that are in-line with the transient air airflow (designated by arrows 48) produced by a body panel impact. The pressure sensor 52 is disposed in a passage 57 extending between the airflow ports 53, 54, and the difference between the airflow in restricted airflow port 53 (designated by arrow 55) and the airflow in unrestricted airflow port 54 (designated by arrows 56) produces a corresponding pressure difference across the sensor 52. The sensor 52 produces a signal corresponding to the pressure difference, which is also an indication of the magnitude of the impact-related transient airflow.

Referring to FIG. 3C, the Pitot tube sensor 60 has a sensor body 61, first and second pressure chambers 62, 63 and a differential pressure sensor 64 separating the pressure chambers 62 and 63. The sensor body 61 is located adjacent a body panel (such as bumper 18 or door panels 20a, 22a) and defines a central air passage 65 having an inlet 66 that is in-line with the transient air airflow (designated by arrows 48) produced by a body panel impact, and one or more static air passages 66, 67 having inlets 68, 69 that are perpendicular to the impact-related airflow. The central air passage 65 is coupled to the first pressure chamber 62, while the static air passages 66, 67 are coupled to the second pressure chamber 63. The sensor 64 is responsive to the difference in pressures between the first and second chambers 62, 63, and such difference provides a measure of velocity of the impact-related transient airflow.

In summary, the present invention provides a novel crash sensing approach that utilizes satellite sensing modules to detect serious vehicle impacts both quickly and reliably, in part by responding to a transient airflow inboard of a vehicle body panel that is struck by an object. Since the airflow sensor is responsive to transient air displacement, it does not need to be located in a closed or sealed cavity such as a door; this broadens the applicability of the sensing approach to different types of impacts and installations. While the present invention has been described with respect to the illustrated embodiments, it is recognized that numerous modifications and variations in addition to those mentioned herein will occur to those skilled in the art. For example, airflow may be sensed differently than described herein, and so on. Accordingly, it is intended that the invention not be limited to the disclosed embodiments, but that it have the full scope permitted by the language of the following claims.

## Claims

1. Supplemental restraint deployment apparatus for a vehicle (10), comprising:
a satellite module (12, 14, 16) mounted near a periphery of the vehicle (10);
primary and secondary crash sensors (36, 37) disposed in said satellite module, said secondary crash sensor (37) utilizing a sensing technology that is different than a sensing technology of said primary crash sensor (36); and
means (38/28) for processing primary and secondary crash signals respectively generated by said primary and secondary crash sensors (36, 37) to detect a severe crash event and issuing a supplemental restraint deployment command when said severe crash event is detected (39).

2. The apparatus of claim 1, wherein:
said satellite module (12, 14, 16) is mounted inboard of a vehicle body panel (18, 20a, 22a); and
either said sensing technology of said primary crash sensor (36) or said sensing technology of said secondary crash sensor (37) is responsive to airflow inboard of said vehicle body panel (18, 20a, 22a) due to the crash event.

3. The apparatus of claim 2, wherein said vehicle body panel is a bumper (18) of said vehicle (10).

4. The apparatus of claim 2, wherein said vehicle body panel is an exterior panel (20a, 22a) of a vehicle side door (20, 22).

5. The apparatus of claim 4, wherein one of said primary and secondary crash sensors (36) is responsive to airflow inboard of said exterior panel (20a, 22a) of said vehicle side door (20, 22) due to the crash event, and the other of said primary and secondary crash sensors (37) is responsive to a pressure in said side door (20, 22).

6. The apparatus of claim 4, wherein one of said primary and secondary crash sensors (36) is responsive to airflow inboard of said exterior panel (20a, 22a) of said vehicle side door (20, 22) due to the crash event, and the other of said primary and secondary crash sensors (37) is responsive to a lateral acceleration of said vehicle (10).

7. The apparatus of claim 1, wherein:
said satellite module (12, 14, 16) is mounted inboard of a vehicle body panel (18, 20a, 22a); and
one of said primary and secondary crash sensors (36) is responsive to airflow inboard of said vehicle body panel (18, 20a, 22a) due to the crash event.

8. The apparatus of claim 7, wherein said one sensor (36) includes a heated element (42) disposed in an airflow inboard of said vehicle body panel (18, 20a, 22a) due to the crash event

9. The apparatus of claim 7, wherein said one sensor (36) includes restricted and unrestricted passages (53, 54) aligned with an airflow inboard of said vehicle body panel (18, 20a, 22a) due to the crash event, and a differential pressure sensor (52) responsive to a pressure difference between said restricted and unrestricted passages (53, 54).

10. The apparatus of claim 7, wherein said one sensor (36) is a Pitot tube sensor (60).

11. The apparatus of claim 1, wherein said processing means (38) is disposed in said satellite module (12, 14, 16).

12. The apparatus of claim 1, wherein said processing means (28) is disposed a central control module (28) mounted in a central region of said vehicle (10).
